Europäisches Patentamt

European Patent Office

Office européen des brevets

(11) Publication number: **0 088 200**
**B1**

(12) **EUROPEAN PATENT SPECIFICATION**

(45) Date of publication of patent specification: 15.06.88

(51) Int. Cl.⁴: **H 02 P 1/32,** H 02 P 1/28

(21) Application number: 82850042.1

(22) Date of filing: 08.03.82

(54) Method and apparatus for running control of a loom.

(43) Date of publication of application:
14.09.83 Bulletin 83/37

(45) Publication of the grant of the patent:
15.06.88 Bulletin 88/24

(84) Designated Contracting States:
CH DE FR GB IT LI

(56) References cited:
DE-A-1 932 998
DE-A-2 608 492
DE-B-2 755 271
GB-A-1 122 113
JP-A-55 084 444
NL-C- 2 476

PHILIPS APPLICATION NOTE, no. 148, pages
1-5, Eindhoven (NL); G.J. TOBISCH: "Solid-
state star/delta controller using triacs".

(73) Proprietor: **TSUDAKOMA KOGYO KABUSHIKI
KAISHA**
**18-18 5-chome, Nomachi
Kanazawa-shi Ishikawa-Ken (JP)**

(72) Inventor: **Sugita, Katsuhiko
264, Magae 3-chome
Kanazawa-shi Ishikawa-ken (JP)**
Inventor: **Sakano, Toshiyuki
Naka 109, Kozaka-machi
Kanazawa-shi Ishikawa-ken (JP)**

(74) Representative: **Ström, Tore et al
Ström & Gulliksson AB Studentgatan 1 P.O. Box
4188
S-203 13 Malmö (SE)**

## Description

### Background of the invention

The present invention relates to method and apparatus for running control of a loom run by an electric drive motor having primary windings supplied from an electric power source providing a substantially constant voltage, said control being carried out via changes in the voltage applied to each primary winding of the drive motor. Such running control of a loom is known e.g. from Japanese Patent Publication JP—A—55-84444.

For various reasons, the value of electric voltage to be applied to a drive motor for a loom has to be time-functionally controlled properly in particular during the starting period of loom running. Such voltage control is necessitated mainly from the viewpoint of stripe defect reduction. Stripe defects herein referred to includes thick and thin places on a fabric running in the weft direction. Generation of stripe defects on a fabric is in general caused by improper beating motion.

Such improper beating motion results from the starting characteristics of the drive motor for the loom.

For proper beating motion on a loom, its drive motor is required to generate a large torque in particular at starting of loom running. For generation of a large torque, a high voltage has to be applied to each primary winding of the drive motor. However, constant application of such a high voltage, which is higher than the normal running voltage, to each primary winding of the drive motor inevitably causes increased power consumption and leads to low running efficiency. For optimum running efficiency, the drive motor has to operate under application of its normal running voltage. That is, application of a voltage higher than the normal running voltage is wanted from the viewpoint of product quality and application of the normal running voltage is wanted from the viewpoint of running efficiency. As mentioned previously the voltage applied to the drive motor for the loom should thus be controlled properly in order to reduce stripe defects.

Through DE—B—2 755 271 it is previously known to control the voltage applied to an asynchronous motor, which operates a valve or a slide between open and closed positions, by switching the windings of the motor from delta configuration to star configuration in order to obtain reduced torque during opening and closing sequences and a normal higher torque during movement between these positions.

From NL—C—2 476 is also known an arrangement for starting an electric motor which is connected by means of a voltage adjuster comprising transformer and adjusters. Switching assemblies are used to adjust the voltage supplied to the motor for switching between a low starting voltage and a higher normal running voltage.

From the prior art it is thus known to control the voltage of an electric motor in order to provide a low starting voltage and then switching over to a high normal running voltage. Applying this known mode of drive motor control for running control of a loom run by an electric drive motor would mean a low starting torque and a subsequent higher running torque, which still would involve risks of stripe defects of the kind mentioned previously and poor running characteristics during normal running.

### Summary of the invention

. It is the primary object of the present invention to restrain generation of stripe defects during starting period of loom running by assuring high starting torque of a drive motor for a loom without impairing its running characteristics during normal running period.

In accordance with one basic aspect of the present invention which is specified in Claim 1, a relatively high voltage is provisionally applied to each primary winding of the drive motor during the starting period of the loom running for generation of a relatively large torque, and a lower voltage suited for normal loom running is continuously applied to each primary winding of the drive motor after a predetermined period from starting of the loom running for generation of a smaller torque.

In a preferred embodiment of the present invention, the voltage applied to the drive motor is lowered when the loom is placed under its normal running condition.

In another preferred embodiment of the present invention, the voltage applied to the drive motor is lowered before the loom is placed under its normal running condition.

In a further preferred embodiment ·of the present invention, the voltage applied to the drive motor is lowered after the loom has been placed under its normal running condition.

Another basic aspect of the present invention is specified in Claim 7.

Still another basic aspect of the present invention is specified in Claim 12.

### Brief description of the drawings

Fig. 1 is a circuit diagram of a first embodiment of the apparatus in accordance with the present invention,

Fig. 2 is a circuit diagram of a control circuit which controls operation of electromagnetic contactors used for the arrangement shown in Fig. 1,

Figs. 3A through 4B are circuit diagrams for showing the operation of the apparatus shown in Fig. 1,

Fig. 5 is a block diagram of a control circuit which controls operation of a time-limit relay used for the arrangement shown in Fig. 2,

Fig. 6 is a graph for showing the state of signals processed in the arrangement shown in Fig. 5,

Fig. 7 is a circuit diagram of a second embodiment of the apparatus in accordance with the present invention,

Fig. 8 is a circuit diagram of a control circuit which controls operation of electromagnetic contactors used for the arrangement shown in Fig. 7, and

Figs. 9A through 11B are circuit diagrams for showing the operation of the apparatus shown in Fig. 7.

Description of the preferred embodiments

As described already, the voltage to be applied to the primary winding of a drive motor for a loom is time-functionally adjusted in accordance with the basic aspect of the present invention. This time-functional voltage adjustment is based on the following analysis.

The torque T of a drive motor is in general defined by the following equation:

$$T = \frac{m \cdot E \cdot I \cdot \cos \theta \cdot P}{4\pi f \cdot 9.8}$$

here

m constant
E: secondary voltage
I: secondary current
P: number of poles
f: electric power source frequency
θ: phase angle between magnetic flux and current.

This equation indicates the fact that the torque T of a drive motor is equal to a quotient obtained by dividing its secondary electric power by its synchronizing angular velocity. The primary voltage, i.e. the voltage applied to the primary winding of the drive motor, is proportional to the secondary voltage and current. As a consequence, the torque T of the drive motor is proportional to the square of its primary voltage.

As is well known by one skilled in the art, a delta connection for the primary winding provides higher primary voltage than a star connection, and such higher voltage for the primary winding makes the output torque of the drive motor 2 to 9 times higher than that with the star connection, if the other construction of the drive motor is unchanged. Further, even when the delta connection for the primary winding is maintained, provisional application of higher voltage from the electric power source generates higher output torque of the drive motor over a certain period. In other words, stronger beating motion is provided during that particular period.

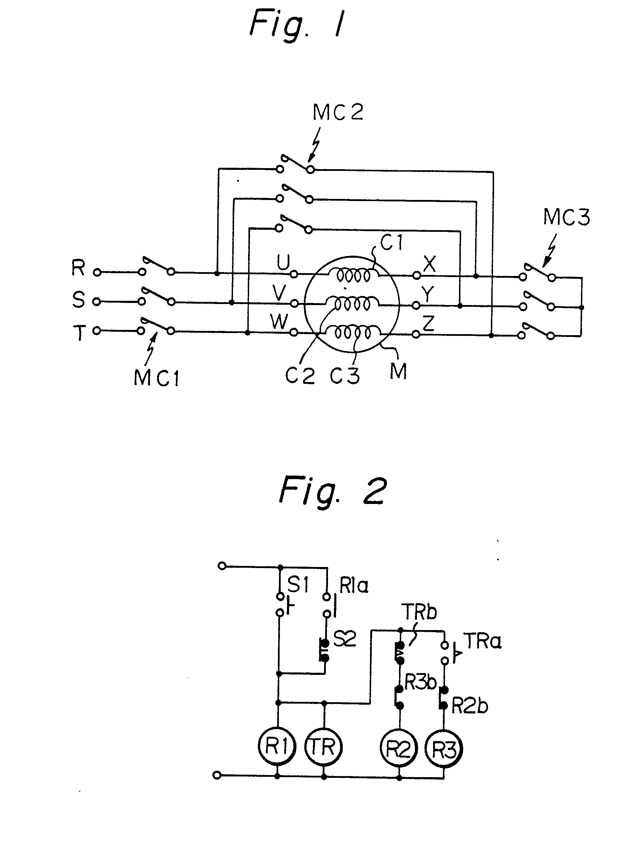

One embodiment of the apparatus in accordance with the present invention is shown in Figs. 1 and 2, in which a drive motor M includes a primary winding made up of three stator coils C1 to C3. The first stator coil C1 is provided with a pair of opposite chips U and X, the second stator coil C2 is provided with a pair of opposite chips V and Y, and the third stator coil C3 is provided with a pair of opposite chips W and Z. Electric power is supplied, via respective electromagnetic contactors MC1 to MC3, from a given electric power source (not shown).

More specifically, the first chips U, V and W of the stator coils C1 to C3 are connected to the electric power source via the first electromagnetic contactor MC1. These chips U, V and W are connected via the second electromagnetic contactor MC2 to chips Z, X and Y, so that closure of the second electromagnetic contactor MC2 should establish short circuits between the first chips U, V and W and the second chips Z, X and Y, respectively. The one terminals of the third electromagnetic contactor MC3 are connected to the second chips Z, X and Y whereas the other terminals of the third electromagnetic contactor MC3 are connected to each other so that closure of the third electromagnetic contactor MC3 should establish short circuit between the second chips X, Y and Z.

Operation of the electromagnetic contactors MC1 to MC3 is controlled by the control circuit shown in Fig. 2, in which the control circuit includes three relays R1 to R3 and a time-limit relay TR. When these relays are activated, corresponding contacts and the above-described electromagnetic contactors MC1 to MC3 operate as programmed.

When the first relay R1 is activated, a first relay a-contact R1a and the first electromagnetic contactor MC1 are closed. When the second and third relays R2 and R3 are activated, relay b-contacts R2b and R3b are opened whereas the second and third electromagnetic contactors MC2 and MC3 are closed. When the time-limit relay TR is activated, a time-limit a-contact TRa is closed and a time-limit b-contact TRb is opened with a prescribed time delay.

One terminal of the relays R1 to R3 and the time-limit relay TR are all connected to one output terminal of the electric power source. One terminal of the first relay a-contact R1a and a first switch S1 are connected to the other output terminal of the electric power source. The other terminal of the first relay a-contact R1a is connected, via a second switch S2, to the other terminal of the first switch S1. The first and second switches S1 and S2 are both manually operable and include self-reversible contacts.

The other terminal of the first switch S1 is connected to the other terminals of the first and time-limit relays R1 and TR. The other terminal of the first switch S1 is connected, via the time-limit b-contact TRb and the third relay b-contact R3b, to the other terminal of the second relay R2. The other terminal of the first switch S1 is further connected, via the time-limit a-contact TRa and the second relay b-contact Rb2, to the other terminal of the third relay R3.

The operation of the apparatus with the above-described construction will hereinafter be explained in sequence.

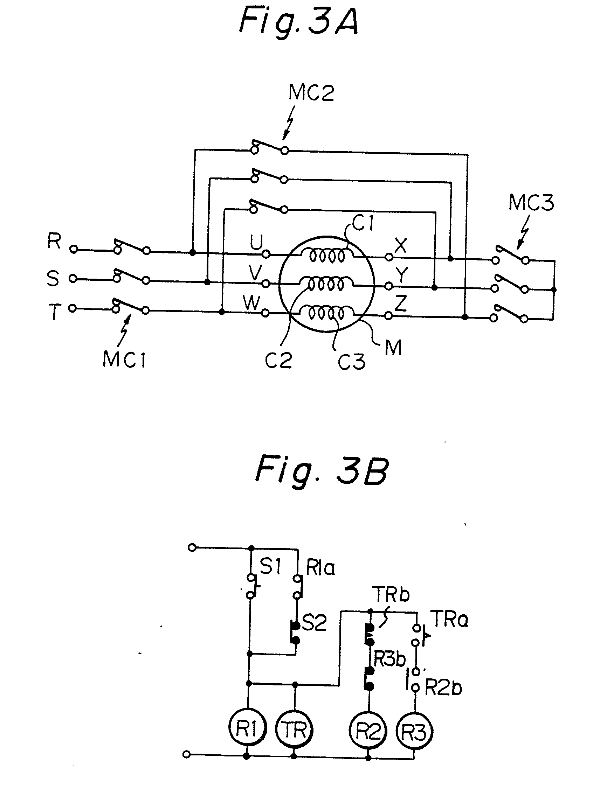

For starting of the loom running, the first switch S1 is manually depressed in order to activate the first second and time-limit relays R1, R2 and TR. As the first relay R1 is activated, the first relay a-contact R1a is closed in order to close the self-holding circuit for the first relay R1. As a consequence, activation of the first, second and time-limit relays R1, R2 and TR is maintained even after the pressure on the first switch S1 is removed. Activation of the first and second relays R1 and R2 opens the second relay b-contact R2b. The condition of the control circuit with the depressed first switch S1 is illustrated in Fig. 3B.

Activation of the first and second relays R1 and R2 causes closure of the first and second electromagnetic contactors MC1 and MC2. As a consequence, a delta connection is established for the primary winding coils C1 to C3 of the drive motor M as shown in Fig. 3A. Thus, supply of the electric power is initiated via the closed electromagnetic contactor MC1 and the electric current flows to the primary winding coils C1 to C3 for starting of the loom running.

As described already, the value of the voltage applied to the primary winding of the drive motor M under the delta connection is about $\sqrt{3}$ times as high as that under the star connection and, as a consequence, the output torque of the drive motor M increases accordingly.

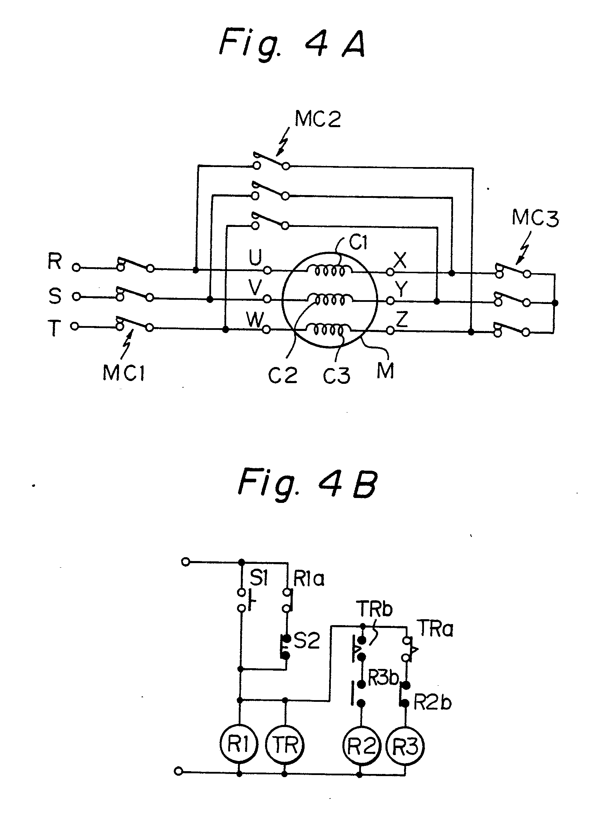

After a prescribed length of time has passed from starting of the loom running, i.e. depression of the first switch S1, the time-limit relay TR operates to close its time-limit a-contact TRa and open its time-limit b-contact TRb, respectively. Opening of the time-limit b-contact TRb causes deactivation of the second relay R2 which thereupon closes the second relay b-contact R2b. Since the time-limit a-contact TRa is in the closed state, the third relay R3 is activated to open the third relay b-contact R3b. This condition is illustrated in Fig. 4B. The timing for the above-described operation of the time-limit relay TR is adjusted by a timing control circuit which will be later explained in more detail.

Activation of the third relay R3 further causes closure of the third electromagnetic contactor MC3 whereas deactivation of the second relay R2 opens the second electromagnetic contactor MC2. As a consequence, a star connection is established for the primary winding coils C1 to C3 of the drive motor M as shown in Fig. 4A.

The value of the voltage applied to the primary winding of the drive motor M under the star connection is apparently lower than that under the delta connection and, as a consequence, the output torque of the drive motor M decreases accordingly.

When the loom running is to be stopped, the second switch S2 is manually depressed. Depression of the second switch S2 causes deactivation of the first, third and time-limit relays R1, R3 and TR. As a result, the first relay a-contact R1a and the time-limit a-contact TRa are rendered open, and the third relay b-contact R3b and the time-limit b-contact TRb are closed to resume the condition shown in Fig. 2.

Deactivation of the first relay R1 causes corresponding opening of the first electromagnetic contactor MC1 so that the electric power supply to the drive motor M is cancelled. The drive motor M ceases its rotation and the loom running is stopped. Further, deactivation of the third relay R3 renders the third magnetic contactor MC3 open so that the connection between the primary winding coils C1 to C3 of the drive motor M should be cancelled. The condition shown in Fig. 1 has been resumed.

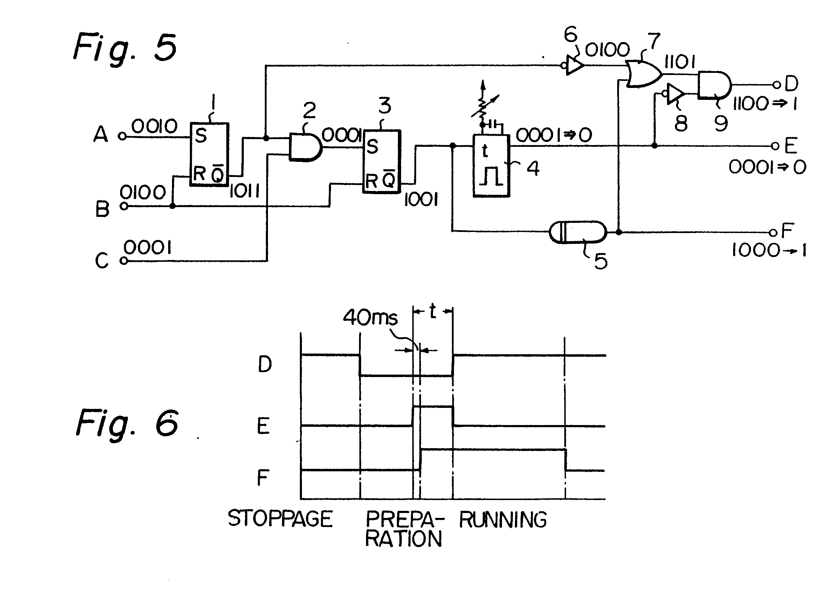

One embodiment of the timing control circuit for the above described time-limit relay TR is illustrated in Fig. 5 and its exemplary operation is shown in Fig. 6.

The following description is based on the positive logic. In the time-limit control circuit shown in Fig. 5, one left side terminal A is connected to a preparation switch (not shown) for initiating preparatory operation of the loom. Here the preparatory operation includes activation of the blower and the heater and deactivation of the yarn breakage indicator lamps of the loom. The other left side terminal B is connected to the second switch S2 for causing stoppage of loom running (see Fig. 2) and to appropriate means for generating stop signals upon yarn breakages. A further left side terminal C is connected to the first switch S1 for starting loom running. When any one of associated switches is depressed, a logic "1" appears at the corresponding terminal A, B or C. One right side terminal D is connected to the star connection group, the other terminal E to the delta connection group and a further terminal F to the drive motor rotation group in the circuit shown in Fig. 2, respectively. When a logic "1" appears at any of the terminals D, E and F, the corresponding group is activated.

The terminal A is connected to the set terminal S of the first flip-flop 1, the terminal B to the reset terminal R of the first flip-flop 1 and to the reset terminal R of the second flip-flop 3, and the terminal C to the second input terminal of the first AND-gate 2. The first input terminal of the first AND-gate 2 is connected to an output terminal $\bar{Q}$ of the first flip-flop 1.

The output terminal $\bar{Q}$ of the first flip-flop 1 is also connected to the first input terminal of an OR-gate 7 via an inverter 6. The output terminal of the OR-gate 7 is connected to the first input terminal of the second AND-gate 9 whose output terminal is connected to the star connection terminal D.

The output terminal of the first AND-gate 2 is connected to the set terminal S of the second flip-flop 3 whose output terminal $\bar{Q}$ is connected to the input terminal of a one-shot multivibrator 4. In the case of the illustrated example, the input holding time "t" of this multivibrator 4 is set to a value between 150 and 1000 ms. The output terminal of the multivibrator 4 is connected, on the one hand, directly to the delta connection terminal E and, on the other hand, to the second input terminal of the second AND-gate 9 via an inverter 8.

The output terminal $\bar{Q}$ of the second flip-flop 3 is connected to the input terminal of a delay circuit 5. In the illustrated example, the delay time of the delay circuit 5 is set to 40 ms. The output terminal of the delay circuit 5 is connected, on the one hand, to the second input terminal of the OR-gate 7 and, on the other hand, to the drive motor terminal F.

The operation of the time-limit control circuit with the above-described construction is as follows.

Under normal running condition of the loom, no switches are depressed and logics "0" appear at the three left side terminals A, B and C.

Consequently, a logic "1" is generated at the output terminal Q̄ of the first flip-flop 1 and inverted into a logic "0" by operation of the inverter 6 which is then passed to the first input terminals of the OR-gate 7 and the first AND-gate 2. Since the logic "0" at the start terminal C is concurrently passed to the second input terminal of the first AND-gate 2, the first AND-gate 2 generates a logic "0" as its output which is then passed to the set terminal S of the second flip-flop 3. Since the logic "0" at the stop terminal B is concurrently passed to the reset terminal R of the first flip-flop 3, a logic "1" is generated at the output terminal Q̄ of the first flip-flop 3. Upon receipt of this logic "1", the multivibrator 4 generates a logic "0". This logic "0" is then passed to the delta connection terminal E so that the delta connection group should not be activated. The logic "0" from the multivibrator 4 is further inverted into a logic "1" by operation of the inverter 8 which is then passed to the second input terminal of the second AND-gate 9.

The output logic "1" of the second flip-flop 3 is, on the one hand, passed to the drive motor terminal F via the delay circuit 5 so that the drive motor group should be kept under activation. The logic "1" is, on the other hand, passed to the second input terminal of the OR-gate 7 which thereupon generates a logic "1". This logic "1" is passed to the first input terminal of the second AND-gate 9. Since the inverted logic "1" from the multivibrator 4 is concurrently passed to the second input terminal of the second AND-gate 9, the second AND-gate 9 generates a logic "1" as its output which is then passed to the star connection terminal D so that the star connection group should be activated. As a consequence, the drive motor M of the apparatus shown in Fig. 1 is driven for rotation with the star connection for its primary winding during the normal running of the loom.

When running of the loom is stopped either purposely or by accident, a logic "1" appears at the stop terminal B whilst other terminals A and C are occupied by logics "0". This logic "1" from the stop terminal B resets the first flip-flop 1 which thereupon generates a logic "0" at its output terminal Q̄. This logic "0" is inverted into a logic "1" by operation of the inverter 6 which is passed to the OR-gate 7. The OR-gate 7 then generates a logic "1" as its output.

The output logic "1" from the first flip-flop 1 is passed to the first input terminal of the first AND-gate 2 whose second input terminal is concurrently in receipt of the logic "0" from the start terminal C. Consequently, the first AND-gate 2 generates an output logic "0" which is then passed to the set terminal S of the second flip-flop 3. The logic "1" at the stop terminal B is concurrently passed to the reset terminal R of the second flip-flop 3 which thereupon generates a logic "0" at its output terminal Q̄. Upon receipt of this logic "0", the multivibrator 4 generates an output logic "0" which is then passed to the delta connection terminal E so that the delta connection group should not be activated. This output logic "0" of the multivibrator 4 is inverted into a logic "1" by operation of the inverter 8 which is then passed to the second input terminal of the second AND-gate 9.

The output logic "0" of the second flip-flop 3 is passed, via the delay circuit 5, to the drive motor terminal F so that the drive motor group should not be activated. The above-described output logic "1" of the OR-gate 7 is passed to the first input terminal of the second AND-gate 9 whose second input terminal is concurrently in receipt of the inverted logic "1" from the multivibrator 4. As a result, the second AND-gate 9 generates an output logic "1" which is then passed to the star connection terminal D so that the star connection group should be activated.

Thus, when the running of the loom is stopped in the apparatus shown in Fig. 1, the star connection for the primary winding is retained but the drive motor ceases its rotation.

When preparatory operation is entered in advance to starting of the loom running, a logic "1" appears at the preparation terminal A and the other terminals B and C are occupied by logics "0". The logic "1" from the preparation terminal A resets the first flip-flop 1 which generates a logic "1" at the output terminal Q̄. This logic "1" is inverted into a logic "0" by operation of the inverter 6 which is then passed to the first input terminal of the OR-gate 7. The logic "1" from the first flip-flop 1 is further passed directly to the first input terminal of the first AND-gate 2 whose second input terminal is concurrently in receipt of the logic "0" from the start terminal C. Then, the first AND-gate 2 generates a logic "0" which is then passed to the set terminal S of the second flip-flop 3. Concurrently with this procedure, the logic "0" from the stop terminal B is passed to the reset terminal R of the second flip-flop 3 which generates a logic "0" at its output terminal Q̄. Upon receipt of this logic "0", the multivibrator 4 generates a logic "0" which is then passed to the delta connection terminal E so that the delta connection group should not be activated. This output logic "0" is inverted into a logic "1" by operation of an inverter 8 which is then passed to the second input terminal of the second AND-gate 9.

The output logic "0" of the second flip-flop 3 is passed, via the delay circuit 5, to the drive motor terminal F so that the drive motor group should not be activated. This logic "0" is further passed to the second input terminal of the OR-gate 7 which generates an output logic "0". This output logic "0" is then passed to the first input terminal of the second AND-gate 9 whose second input terminal is concurrently in receipt of the inverted logic "1" from the multivibrator 4. As a result, the second AND-gate 9 generates an output logic "0" which is then passed to the star connection terminal D so that the star connection group should not be activated.

During the preparatory operation of the loom, no connection is established for the primary winding of the drive motor M in the apparatus shown in Fig. 1.

As the loom running is started, a logic "1" appears at the start terminal A and the other terminals A and B are occupied by logics "0". The logic "0" from the preparation terminal A is passed to the set terminal S and the logic "0" from the stop terminal B is passed to the reset terminal R of the first flip-flop 1 which thereupon generates a logic "1" at its output terminal $\overline{Q}$. This output logic "1" is inverted into a logic "0" by operation of the inverter 6 which is then passed to the first input terminal of the OR-gate 7. The output logic "1" from the first flip-flop 1 is further passed directly to the first input terminal of the first AND-gate 2 whose second input terminal concurrently receives the logic "1" from the start terminal C. As a result, the first AND-gate 2 generates an output logic "1" which is passed to the set terminal S of the second flip-flop 3. The second flip-flop 3 is accordingly set and generates a logic "1" at its output terminal $\overline{Q}$.

This output logic "1" is passed to the delay circuit 5 which generates a logic "1" with 40 ms time delay. Consequently, the motor drive terminal F is occupied by the logic "0" for the period of 40 ms from starting of the loom running, and by the logic "1" after the period is overdue.

The above-described output logic "1" is also passed to the second input terminal of the OR-gate 7 again with 40 ms time delay which then generates an output logic "1" to be applied to the first input terminal of the second AND-gate 9.

The logic "1" from the output terminal $\overline{Q}$ of the second flip-flop 3 is passed to the multivibrator 4. As a consequence, the multivibrator 4 generates an output logic "1" for the period of t ms ($150 \leqq t \leqq 1000$) from starting of the loom running, and an output "0" after the period is overdue. In accordance with this shift in logic, the delta connection terminal E is occupied by the logic "1" for the period of t ms from starting of the loom running, and the delta connection group is activated so that the drive motor M should be driven for rotation with the delta connection for its primary winding during this starting period of the loom running in the apparatus shown in Fig. 1. In the mean time, the output logic "1" of the multivibrator 4 is inverted into a logic "0" by operation of the inverter 8 which is then applied to the second input terminal of the second AND-gate 9. As a result, the second AND-gate 9 applies its output logic "0" to the star connection terminal D so that the star connection group in the circuit shown in Fig. 2 should not be activated.

After the starting period of t ms is overdue, the logic "0" appears at the delta connection terminal E in order to deactivate the delta connection group in the circuit shown in Fig. 1, whereby the delta connection in the apparatus shown in Fig. 1 is cancelled. Concurrently with this shift, the output logic "0" of the multivibrator 4 is inverted into a logic "1" by operation of the inverter 8 which is then passed to the second input terminal of the second AND-gate 9. The AND-gate 9 therefore generates an output logic "1" to be passed to the star connection terminal D, the star connection group in the circuit shown in Fig. 2 is activated and the drive motor M is driven for continued rotation but with the star connection for its primary winding in the apparatus shown in Fig. 1.

In summary, adjustment of the length of the input holding time "t" of the one-shot multivibrator 4 in the time-limit control circuit shown in Fig. 5 enables free change in timing of the shift from the delta to star connection and vice versa in the apparatus shown in Fig. 1.

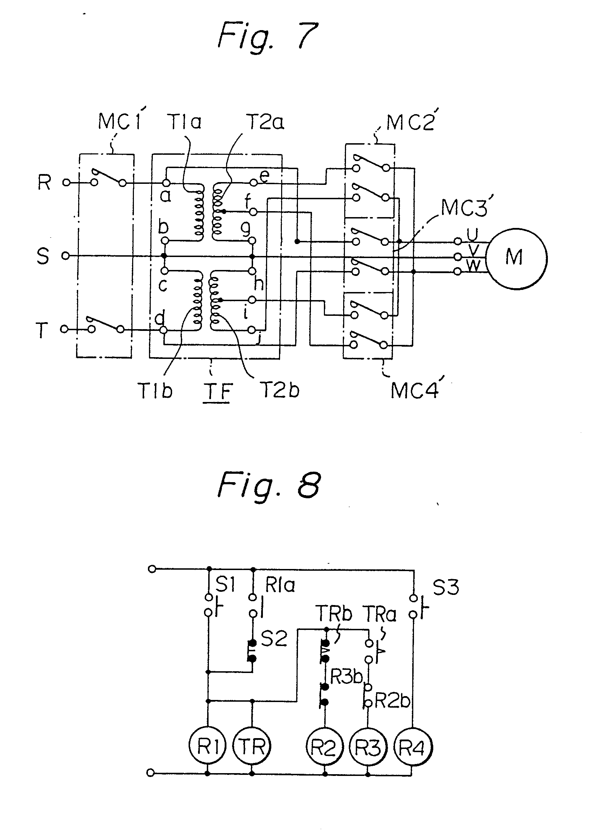

In the case of the first embodiment of the present invention shown in Figs. 1 and 2, the output torque of the drive motor M for the loom is adjusted during the starting period of loom running by time-functionally shifting the connection for its primary winding from delta to star and vice versa. As briefly mentioned already, however, such adjustment of the output torque of the drive motor can also be effected by provisionally applying voltage higher than the electric power source voltage to the drive motor during the starting period of loom running even without shift in connection for its primary winding. The second embodiment of the present invention shown in Figs. 7 and 8 enables output torque adjustment of this fashion. In the following description and drawings, elements substantially similar in construction and operation to those used for the apparatus shown in Figs. 1 and 2 are designated with similar reference characters.

In the arrangement shown in Fig. 7, the drive motor M for the loom is connected to the given electric power source via a transformer TF and four electromagnetic contactors MC1' to MC4'.

More specifically, the transformer TF includes primary winding coils T1a and T1b and secondary winding coils T2a and T2b. The first primary coil T1a has a pair of end terminals a and b whereas the second primary coil T1b has a pair of end terminals c and d. The primary end terminals a and d are connected, via the first electromagnetic contactor MC1', to the R- and T-phase terminals of the three-phase electric power source whereas the primary end terminals b and c are both connected to the S-phase terminal of the electric power source. The first secondary coil T2a has a pair of end terminals e and g whereas the second secondary coil T2b has a pair of end terminals h and j. The secondary coils T2a and T2b are further provided with intermediate terminals f and i, respectively. The secondary end terminals g and h are both connected to the S-phase terminal of the electric power source.

One terminals of the electromagnetic contactors MC2', MC3' and MC4' are connected to chips U and W of the drive motor M and a chip V of the drive motor M is connected to the S-phase terminal of the electric power source. The other terminals of the electromagnetic contactor MC2' are connected to the secondary end terminals e and j of the first and second secondary coils T2a and T2b, the other terminals of the electromagnetic contactor MC4' are connected to the secondary intermediate terminals f and i of the first and second secondary coils T2a and T2b, and the other terminals of the electromagnetic contactor MC3' are connected to the primary end terminals a and d of the first and second primary coils T1a and T1b.

Here, the number of turns for the secondary coils T2a and T2b is larger than that for the primary coils T1a and T1b. As a consequence, when the secondary end terminals e and j are connected to the input chips U and W of the drive motor M, the value of the voltage applied to the drive motor M is larger than that of the electric power source voltage.

The position of the taps on the secondary coils T2a and T2b for the secondary intermediate terminals f and i is selected so that the number of turns for the section between the terminals f and g and for the section between the terminals h and i should be smaller than that for the section between the terminals a and b and for the section between the terminals c and d. As a consequence, when the secondary intermediate terminals f and i are connected to the input chips W and U of the drive motor M, the value of voltage applied to the drive motor M is smaller than that of the electric power source voltage.

Further, when the primary end terminals a and d of the first and second primary coils are connected to the input chips U and W of the drive motor M, the value of voltage applied to the drive motor M is equal to that of the electric power source voltage.

The operation of the electromagnetic contactors MC1' to MC4' is controlled by the circuit shown in Fig. 8. The construction of this circuit is basically same as that of the circuit shown in Fig. 2 except for addition of the third switch S3 and the fourth relay R4. More specifically, one terminal of the fourth relay R4 is connected, via the third switch S3, to the one terminal of the electric power source whereas the other terminal of the fourth relay R4 is connected to the other terminal of the electric power source.

When the first relay R1 is activated, a first relay a-contact R1a and the first electromagnetic contactor MC1' are closed. When the second and third relay R2 and R3 are activated, the second and third relay b-contacts R2b and R3b are opened whereas the second and third electromagnetic contactors MC2' and MC3' are closed. When the fourth relay R4 is activated, the fourth electromagnetic contactor MC'4 is closed. When the time-limit relay TR is activated, a time-limit a-contact TRa is closed and a time-limit b-contact TRb is opened with a prescribed time delay.

The operation of the apparatus with the above-described construction will hereinafter be explained in sequence.

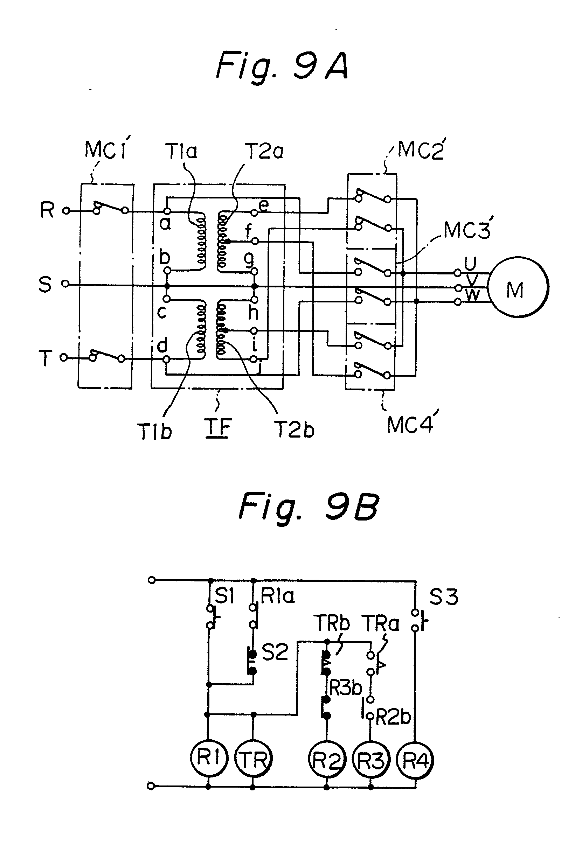

For starting of the loom running, the first switch S1 is manually depressed in order to activate the relays R1, R2 and TR. As the first relay R1 is activated, the first relay a-contact R1a is closed in order to close the self-holding circuit for the first relay R1. As a consequence, activation of the first, second and time-limit relays R1, R2 and TR is maintained even after the manual pressure on the first switch S1 is removed. Activation of the first and second relays R1 and R2 closes the first and second electromagnetic contactors MC1' and MC2', and opens the second relay b-contact R2b. Thus supply of the electric power is initiated via the closed electromagnetic contactors MC1' and MC2' and the electric current flows to the drive motor M for starting of the loom running. This condition is illustrated in Figs. 9A and 9B.

It will be well appreciated that the condition shown in Fig. 9A fairly corresponds to the above-described mode of connection in which the secondary end terminals e and j of the first and second secondary coils T2a and T2b are connected to the input chips U and W of the drive motor M. So, under this condition, the value of the voltage applied to the drive motor M is larger than that of the electric power source voltage so that the drive motor M is able to provide higher output torque.

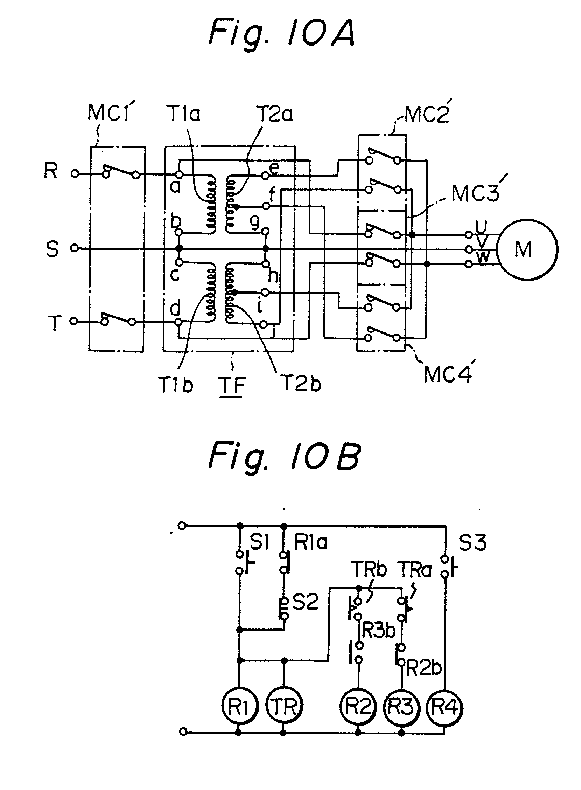

After a prescribed length of time has passed from starting of the loom running, i.e. depression of the first switch S1, the time-limit relay TR operates to close its time-limit a-contact TRa and open its time-limit b-contact TRb, respectively. Opening of the time-limit b-contact TRb causes deactivation of the second relay R2 which thereupon opens the second electromagnetic contactor MC2' and closes the second relay b-contact R2b. Since the time-limit a-contact TRa is in the closed state, the third relay R3 is activated to open the third relay b-contact R3b. This condition is illustrated in Fig. 10b. Activation of the third relay R3 further causes closure of the third electromagnetic contactor MC3'. This condition is shown in Fig. 10A.

It will be well appreciated that the condition shown in Fig. 10A fairly corresponds to the above-described mode of connection in which the primary end terminals a and d of the first and second primary coils T1a and T1b are connected to the input U and W of the drive motor M. So, under this condition, the value of voltage applied to the drive motor M is equal to that of the electric power source voltage. As a consequence, the normal loom running is carried out with less power consumption then the starting period loom running.

When the loom running under the condition shown in Figs. 10A and 10B is to be stopped, the second switch S2 is manually depressed. This causes deactivation of the first, third and time-limit relays R1, R3 and TR. As a result, the first relay a-contact R1a and the time-limit a-contact TRa are rendered open, and the third relay b-contact R3b and the time-limit b-contact TRb are closed to resume the condition shown in Fig. 8.

Deactivation of the first relay R1 causes corresponding opening of the first electromagnetic contactor MC1' so that the electric power supply to the drive motor M should be cancelled. The drive motor M ceases its rotation and the loom running is stopped. Further, deactivation of the third relay R3 renders the third electromagnetic contactor MC3' open so that the drive motor M should be disconnected from the transformer TF. The condition shown in Fig. 7 has been resumed.

The third switch 3 used for the second embodiment shown in Figs. 7 and 8 enables the so-called inching ·operation on the loom. The so-called inching operation includes to run the loom over a small desired crank angle for a very short period for the purposes of defect removal, maintenance adjustment etc. Since the loom has to be run over the small desired crank angle, it is preferable that the output torque of the drive motor should be lower than that in the normal loom running in order to obviate any ill influences by inertia.

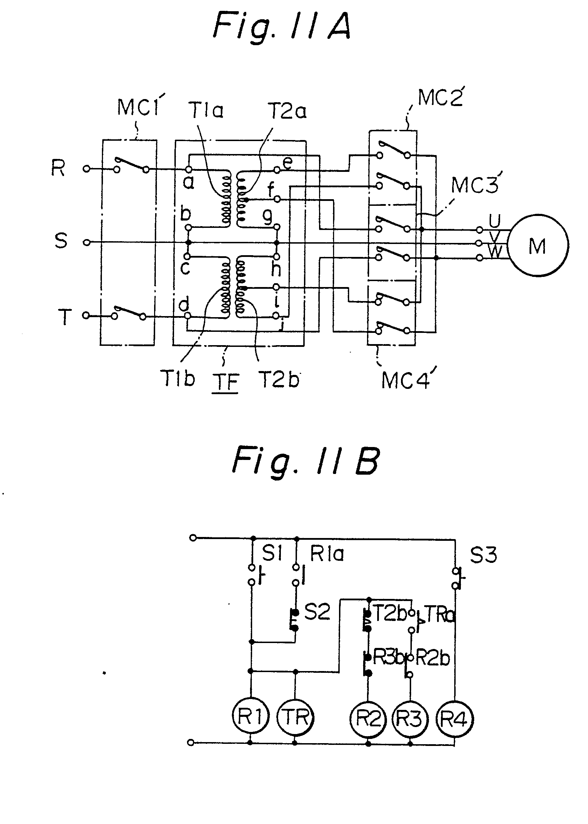

When the normal loom running is interrupted by, for example, a yarn breakage, the relays R1 to R3 are deactivated and the apparatus assumes the condition shown in Figs. 7 and 8. As the third switch S3 is manually depressed under this condition, the fourth relay R4 is activated to close the fourth electromagnetic contactor MC4' as shown in Figs. 11A and 11B.

It will be appreciated that this condition corresponds to the above-described mode of connection in which the secondary intermediate terminals f and i of the first and second secondary coils T2a and T2b are connected to the input terminals W and U of the drive motor M. With this mode of connection, the value of the voltage applied to the drive motor M is smaller than that of the electric power source voltage. As a result, the output torque of the drive motor M under this condition is lower than that in the normal loom running, thereby enabling smooth inching operation on the loom with reduced influence of the inertia. Even when the inching operation is repeated frequently, use of the transformer avoids any overheat troubles. Further, the value of the voltage to be applied to the drive motor M can easily and simply be adjusted by shifting the position of the taps for the secondary intermediate terminals f and i. This means that the output torque of the drive motor M for the inching operation can be easily and freely adjusted depending on the actual process condition. The connection shown in Fig. 7 is adapted for an inching operation in which the drive motor M is driven for normal rotation. For effecting an inching operation in which the drive motor M should be driven for reverse rotation, connection of the selected two input terminals of the drive motor to the transformer has to be changed in a known manner.

In a further embodiment of the present invention, a reactor may be used as a substitute for the transformer TF used for the second embodiment shown in Fig. 7.

Application of high voltage to the primary winding of the drive motor during the starting period of loom running may allow flow of high starting current. In general, however, a group of looms are being driven for concurrent running in a mill and the equipment capacity is usually designed 20 to 30% larger than the critical value. These factors concur to elleviate in practice the influence of the situation in which a couple of looms start their running concurrently.

In accordance with the present invention, the output torque of the drive motor for a loom can freely be shifted from high to normal and/or from normal to low at selected timings after starting of loom running by properly adjusting the voltage to be applied to the drive motor. When the shifting from high to normal is timed to initiation of the normal running condition of the loom, sufficient beating motion is assured during the starting period of loom running with reduced power consumption during normal loom running. When the shifting from high to normal takes place before the loom reaches its normal running condition, generation of thick place defects can be reduced greatly even in the case of fabrics vernalable to thick place formation. When the shifting from high to normal takes place after the loom has reached its normal running condition, generation of thin place defects can be reduced greatly even in the case of fabrics vernalable to thin place formation.

Inching operation can be carried out very easily by provisionally lowering the output torque of the drive motor at any time required.

**Claims**

1. A method for automatic running control of a loom run by an electric drive motor (M) having primary windings (C1, C2, C3) supplied from an electric power source providing a substantially constant voltage, said control being carried out via changes in the voltage applied to each primary winding of the drive motor characterised in

that a relatively high voltage is provisionally applied to each primary winding (C1, C2, C3) of the drive motor (M) during the starting period of the loom running for generation of a relatively large torque,

that a lower voltage suited for normal loom running is continuously applied to each primary winding (C1, C2, C3) of the drive motor (M) after a predetermined period from starting of the loom running for generation of a smaller torque.

2. Method as claimed in claim 1 in which the voltage applied to said drive motor (M) is lowered when said loom is placed under its normal running condition.

3. Method as claimed in claim 1 in which the voltage applied to said drive motor (M) is lowered before said loom is placed under its normal running condition.

4. Method as claimed in claim 1 in which the voltage applied to said drive motor (M) is lowered after said loom has been placed under its normal running condition.

5. Method as claimed in claim 1, 2, 3 or 4 in which said relatively high voltage is obtained by connecting said primary windings (C1, C2, C3) of said drive motor (M) in delta connection mode, and said lower voltage is obtained by connecting said primary windings (C1, C2, C3) of said drive motor (M) into a star connection mode after said predetermined period.

6. Method as claimed in claim 1, 2, 3 or 4 in which said relatively high voltage is obtained by transforming said electric power source voltage at a higher voltage, and said lower voltage is obtained by cancelling said voltage transformation after said predetermined period.

7. Apparatus for automatic running control of a loom having a drive motor (M) supplied from an electric power source of substantially constant output voltage, wherein the drive motor (M) is an induction motor having a plurality of primary windings (C1, C2, C3), and a voltage converting circuit interposed between the electric power source and the drive motor (M) is controlled by a control circuit, characterised in that the voltage converting circuit is arranged and is controlled by the control circuit (R1—R3, TR) so that a relatively high voltage is provisionally applied to each primary winding (C1, C2, C3) of the drive motor (M) during the starting period of loom running for generation of a relatively large torque, and a lower voltage is applied to each primary winding (C1, C2, C3) of the drive motor (M) after a predetermined period from starting of the loom running for generation of a smaller torque.

8. Apparatus as claimed in claim 7 in which said voltage converting circuit includes first, second and third switching assemblies (MC1, MC2, MC3), each switching assembly being an electromagnetic contactor.

9. Apparatus as claimed in claim 7 in which said control circuit (R1—R3, TR) includes a time-limit relay (TR) for fixing said predetermined period, and a time-limit control circuit connected to said time-limit relay (TR) for operation control.

10. Apparatus as claimed in claim 9 in which said time-limit control circuit includes a one-shot multivibrator (4) having an input holding time indicative of said predetermined period.

11. Apparatus as claimed in claims 8 and 9 in which said control circuit further includes, a first relay (R1) connected to said first switching assembly (MC1), a second relay (R2) connected to said second switching assembly (MC2), a third relay (R3) connected to said third switching assembly (MC3), and manually operable start and stop switches (S1, S2) connected to said relays.

12. Apparatus for running control of a loom having a drive motor (M) including primary windings (C1, C2, C3) supplied from an electric power source providing constant electric power source voltage characterized by

a first switching assembly (MC1') connected to said electric power source,

a voltage adjuster (TF) connected, on the input side to said first switching assembly (MC1'), and arranged to generate at first output terminals a voltage higher than said electric power source voltage,

a second switching assembly (MC2') for connecting said first output terminals of said voltage adjuster (TF) to said primary winding of said drive motor (M) when closed during the starting period of loom running,

a third switching assembly (MC3') for connecting directly said electric power source to said primary winding of said drive motor (M) after a predetermined period from starting of said loom running, and

a control circuit (R1—R3, TR) connected to said switching assemblies (MC1', MC2', MC3') for their operation control.

13. Apparatus as claimed in claim 12 in which said voltage adjuster (TF) is a transformer (TF).

14. Apparatus as claimed in claim 12 in which said voltage adjuster is a reactor.

15. Apparatus as claimed in claim 12 in which said control circuit includes a time-limit relay (TR) for fixing said predetermined period, and a time-limit control circuit connected to said time-limit relay (TR) for operation control.

16. Apparatus as claimed in claim 15 in which said time-limit control circuit includes a one-shot multivibrator (4) having an input holding time indicative of said predetermined period.

17. Apparatus as claimed in claim 15 in which said control circuit further includes a first relay (R1) connected to said first switching assembly (MC1'), a second relay (R2) connected to said second switching assembly (MC2'), a third relay (R3) connected to said third switching assembly (MC3'), and manually operable start and stop switches (S1, S2) connected to said relays.

18. Apparatus as claimed in claim 12 in which said voltage adjuster (TF) is further arranged to generate at second output terminals a voltage lower than said electric power source voltage.

19. Apparatus as claimed in claim 18 further comprising a fourth switching assembly (MC4') connected to said control circuit, and connecting said second output terminals of said voltage adjuster (TF) to said primary windings (C1, C2, C3) of said drive motor (M) when closed.

**Patentansprüche**

1. Verfahren für automatische Betriebssteuerung einer Webmaschine, die von einem elektrischen Antriebsmotor (M) angetrieben wird, der von einer im wesentlichen gleichbleibende Spannung liefernden elektrischen Energiequelle versorgte Primärwicklungen (C1, C2, C3) aufweist, wobei die Steuerung im Wege von Änderungen der an jede Primärwicklung des Antriebsmotors angelegten Spannung durchgeführt wird, dadurch gekennzeichnet,

daß eine verhältnismäßig hohe Spannung während der Anlaufzeit des Webmaschinenbetriebs an jede Primärwicklung (C1, C2, C3) des Antriebsmotors (M) zur Erzeugung eines verhältnismäßig großen Drehmoments vorläufig angelegt wird,

daß eine niedrigere, für normalen Webmaschinenbetrieb geeignete Spannung nach einer vorherbestimmten Zeit ab dem Anlauf des Webmaschinenbetriebs zur Erzeugung eines kleineren Drehmoments an jede Primärwicklung (C1, C2, C3) des Antriebsmotors (M) kontinuierlich angelegt wird.

2. Verfahren nach Anspruch 1, bei dem die an den Antriebsmotor (M) angelegte Spannung vermindert wird, wenn die Webmaschine unter ihre normale Betriebsbedingung gebracht wird.

3. Verfahren nach Anspruch 1, bei dem die an den Antriebsmotor (M) angelegte Spannung vermindert wird, ehe die Webmaschine unter ihre normale Betriebsbedingung gebracht wird.

4. Verfahren nach Anspruch 1, bei dem die an den Antriebsmotor (M) angelegte Spannung vermindert wird, nachdem die Webmaschine unter ihre normale Betriebsbedingung gebracht wurde.

5. Verfahren nach Anspruch 1, 2, 3 oder 4, bei dem die verhältnismäßig hohe Spannung durch Verbinden der Primärwicklungen (C1, C2, C3) des Antriebsmotors (M) in Dreieckschaltungsweise erhalten wird, und die niedrigere Spannung erhalten wird durch Verbinden der Primärwicklungen (C1, C2, C3) des Antriebsmotors (M) in Sternschaltungsweise nach der vorherbestimmten Zeit.

6. Verfahren nach Anspruch 1, 2, 3 oder 4, bei dem die verhältnismäßig hohe Spannung durch Umformen der Spannung der elektrischen Energiequelle auf einer höheren Spannung erhalten wird, und die niedrigere Spannung erhalten wird durch Aufheben der Spannungsumformung nach der vorherbestimmten Zeit.

7. Vorrichtung zur automatischen Betriebssteuerung einer Webmaschine mit einem Antriebsmotor (M), der von einer elektrischen Energiequelle versorgt wird, die eine im wesentlichen gleichbleibende Ausgangsspannung hat, bei der der Antriebsmotor (M) ein Induktionsmotor mit einer Vielzahl von Primärwicklungen (C1, C2, C3) ist, und eine zwischen die elektrische Energiequelle und den Antriebsmotor (M) geschaltete Spannungsumwandlungsschaltung von einer Steuerschaltung gesteuert wird, dadurch gekennzeichnet, daß die Spannungsumwandlungsschaltung so angeordnet und von der Steuerschaltung (R1—R3, TR) gesteuert ist, daß während der Anlaufzeit des Webmaschinenbetriebs zur Erzeugung eines verhältnismäßig grossen Drehmoments eine verhältnismäßig hohe Spannung vorläufig an jede Primärwicklung (C1, C2, C3) des Antriebsmotors (M) angelegt wird und eine niedrigere Spannung an jede Primärwicklung (C1, C2, C3) des Antriebsmotors (M) nach einer vorherbestimmten Zeit ab dem Anlauf der Webmaschine zur Erzeugung eines kleineren Drehmoments angelegt wird.

8. Vorrichtung nach Anspruch 7, bei der die Spannungsumwandlungsschaltung eine erste, zweite und dritte Schaltanordnung (MC1, MC2, MC3) enthält und jede Schaltanordnung ein elektromagnetischer Kontaktgeber ist.

9. Vorrichtung nach Anspruch 7, bei der die Steuerschaltung (R1—R3, TR) ein Zeitbegrenzungsrelais (TR) zum Festlegen der vorherbestimmten Zeit und eine an das Zeitbegrenzungsrelais (TR) angeschlossene Zeitbegrenzungssteuerschaltung zur Funktionssteuerung enthält.

10. Vorrichtung nach Anspruch 9, bei der die Zeitbegrenzungssteuerschaltung einen monostabilen Multivibrator (4) enthält, der eine für die vorherbestimmte Zeit bezeichnende Eingangsbelegungszeit hat.

11. Vorrichtung nach Anspruch 8 und 9, bei der die Steuerschaltung ferner ein mit der ersten Schaltanordnung (MC1) verbundenes, erstes Relais (R1), ein mit der zweiten Schaltanordnung (MC2) verbundenes, zweites Relais (R2), ein mit der dritten Schaltanordnung (MC3) verbundenes, drittes Relais (R3) sowie von Hand betätigbare Start- und Stop-Schalter (S1, S2) enthält, die mit den Relais verbunden sind.

12. Vorrichtung zur Betriebssteuerung einer Webmaschine mit einem Antriebsmotor (M), der von einer gleichbleibende elektrische Energiequellenspannung liefernden elektrischen Energiequelle versorgte Primärwicklungen (C1, C2, C3) enthält, gekennzeichnet durch

eine an die elektrische Energiequelle angeschlossene erste Schaltanordnung (MC1'),

einen eingangsseitig an die erste Schaltanordnung (MC1') angeschlossenen Spannungseinsteller (TF), der so eingerichtet ist, daß er an ersten Ausgangsanschlüssen eine höhere Spannung als die Spannung der elektrischen Energiequelle erzeugt,

eine zweite Schaltanordnung (MC2') zum Verbinden der ersten Ausgangsanschlüsse des Spannungseinstellers (TF) mit der Primärwicklung des Antriebsmotors (M) in geschlossenem Zustand während der Anlaufzeit des Webmaschinenbetriebs,

eine dritte Schaltanordnung (MC3') zum unmittelbaren Verbinden der elektrischen Energiequelle mit der Primärwicklung des Antriebsmotors (M) nach einer vorherbestimmten Zeit ab dem Anlauf des Webmaschinenbetriebs, und

eine Steuerschaltung (R1—R3), die mit den Schaltanordnungen (MC1', MC2', MC3') zu deren Funktionssteuerung verbunden ist.

13. Vorrichtung nach Anspruch 12, bei der der Spannungseinsteller (TF) ein Transformator (TF) ist.

14. Vorrichtung nach Anspruch 12, bei der der Spannungseinsteller eine Drossel ist.

15. Vorrichtung nach Anspruch 12, bei der die Steuerschaltung eine Zeitbegrenzungsrelais (TR) zum Festlegen der vorherbestimmten Zeit und eine an das Zeitbegrenzungsrelais (TR) angeschlossene Zeitbegrenzungssteuerschaltung zur Funktionssteuerung enthält.

16. Vorrichtung nach Anspruch 15, bei der die Zeitbegrenzungssteuerschaltung einen monostabilen Multivibrator (4) enthält, der eine für die vorherbestimmte Zeit bezeichnende Eingangsbelegungszeit hat.

17. Vorrichtung nach Anspruch 15, bei der die Steuerschaltung ferner ein mit der ersten Schaltanordnung (MC1') verbundenes, erstes Relais (R1), ein mit der zweiten Schaltanordnung (MC2') verbundenes, zweites Relais (R2), ein mit der dritten Schaltanordnung (MC3') verbundenes, drittes Relais (R3) sowie von Hand betätigbare Start- und Stop-Schalter (S1, S2) enthält, die mit den Relais verbunden sind.

18. Vorrichtung nach Anspruch 12, bei der der Spannungseinsteller (TF) ferner so eingerichtet ist, daß er an zweiten Ausgangsanschlüssen eine niedrigere Spannung als die Spannung der elektrischen Energiequelle erzeugt.

19. Vorrichtung nach Anspruch 18, die ferner eine vierte Schaltanordnung (MC4') aufweist, welche an die Steuerschaltung angeschlossen ist und in geschlossenem Zustand die zweiten Ausgangsanschlüsse des Spannungseinstellers (TF) mit den Primärwicklungen (C1, C2, C3) des Antriebsmotors (M) verbindet.

**Revendications**

1. Procédé pour la commande de la marche automatique d'un métier par un moteur électrique d'entraînement (M) comportant des enroulements primaires (C1, C2, C3) alimentés par une source d'énergie électrique fournissant une tension sensiblement constante, la commande étant exécutée via des changements de la tension appliquée à chaque enroulement primaire du moteur d'entraînement, caractérisé en ce que:

une tension relativement élevée est fournie provisoirement à chaque enroulement primaire (C1, C2, C3) du moteur d'entraînement (M) pendant la période de démarrage de la marche du métier afin de produire un couple relativement élevé;

une tension plus basse adaptée à la marche normale du métier est continuellement appliquée à chaque enroulement primaire (C1, C2, C3) du moteur d'entraînement (M) après une durée prédéterminée à partir du démarrage de la marche du métier afin de produire un couple plus petit.

2. Procédé selon la revendication 1, dans lequel la tension appliquée au moteur d'entraînement (M) est abaissée lorsque le métier est placé dans sa condition normale de marche.

3. Procédé selon la revendication 1, dans lequel la tension appliquée au moteur d'entraînement (M) est abaissée avant que le métier soit placé dans sa condition normale de marche.

4. Procédé selon la revendication 1, dans lequel la tension appliquée au moteur d'entraînement (M) est abaissée après que le métier ait été placé dans sa condition normale de marche.

5. Procédé selon la revendication 1, 2, 3 ou 4, dans lequel la tension relativement élevée est obtenue en connectant les enroulements primaires (C1, C2, C3) du moteur d'entraînement (M) dans le mode de branchement en triangle, et la tension plus basse est obtenue en connectant les enroulements primaires (C1, C2, C3) du moteur d'entraînement (M) dans le mode de branchement en étoile après la durée prédéterminée.

6. Procédé selon la revendication 1, 2, 3 ou 4 dans lequel la tension relativement élevée est obtenue en transformant la tension de la source d'énergie électrique à une tension plus élevée, et la tension plus basse est obtenue en annulant la transformation de la tension à l'issue de la durée prédéterminée.

7. Appareil pour la commande de la marche automatique d'un métier comportant un moteur d'entraînement (M) alimenté par une source d'énergie électrique ayant une tension de sortie sensiblement constante, dans lequel le moteur d'entraînement (M) est un moteur à induction ayant une multitude d'enroulements primaires (C1, C2, C3) et un circuit de conversion de la tension interposé entre la source d'énergie électrique et le moteur d'entraînement (M) est contrôlé par un circuit de commande, caractérisé en ce que le circuit de conversion de la tension est agencé et contrôlé par le circuit de commande (R1—R3, TR), de façon qu'une tension relativement élevée soit appliquée provisoirement à chaque enroulement primaire (C1, C2, C3) du moteur d'entraînement (M) pendant la période de démarrage de la marche du métier pour la production d'un couple relativement grand, et une tension plus faible est appliquée à chaque enroulement primaire (C1, C2, C3) du moteur d'entraînement (M) à l'issue d'une durée prédéterminée après le démarrage de la marche du métier pour la production d'un couple plus petit.

8. Appareil selon la revendication 7, dans lequel le circuit de conversion de la tension comporte des premier, second et troisième ensembles de commutation (MC1, MC2, MC3), chaque ensemble de commutation étant un contacteur électromagnétique.

9. Appareil selon la revendication 7, dans lequel le circuit de commande (R1—R3, TR) comporte un relais de limitation du temps (TR) pour fixer la durée prédéterminée, et un circuit de commande de la limitation du temps connecté au relais de limitation du temps (TR) pour la commande du fonctionnement.

10. Appareil selon la revendication 9, dans lequel le circuit de commande de la limitation du temps comprend un multivibrateur monostable (4) ayant un temps de maintien à l'entrée représentatif de la durée prédéterminée.

11. Appareil selon les revendications 8 et 9 dans lequel le circuit de commande comprend en outre, un premier relais (R1) connecté au premier ensemble de commutation (MC1), un second relais (R2) connecté au second ensemble de commutation (MC2), un troisième relais (R3) connecté au troisième ensemble de commutation (MC3), et des commutateurs de démarrage et d'arrêt pouvant être actionnés manuellement (S1, S2) connectés aux relais.

12. Appareil pour la commande de la marche d'un métier ayant un moteur d'entraînement (M) comportant des enroulements primaires (C1, C2, C3) alimentés par une source d'énergie électrique fournissant une tension constante, caractérisé par:

un premier ensemble de commutation (MC1') connecté à la source d'énergie électrique;

un dispositif de réglage de la tension (TF) connecté, au côté entrée, au premier ensemble de commutation (MC1') et agencé de manière à produire à de premières bornes de sortie une tension supérieure à la tension de la source d'énergie électrique;

un second ensemble de commutation (MC2') pour connecter les premières bornes de sortie du dispositif de réglage de la tension (TF) à l'enroulement primaire du moteur d'entraînement (M) lorsqu'il est fermé pendant la période de démarrage du fonctionnement du métier,

un troisième ensemble de commutation (MC3') pour connecter directement la source d'énergie électrique à l'enroulement primaire du moteur d'entraînement (M) après une durée prédéterminée à l'issue du démarrage de la marche du métier, et

un circuit de commande (R1—R3, TR) connecté aux ensembles de commutation (MC1', MC2', MC3') pour la commande de leur fonctionnement.

13. Appareil selon la revendication 12, dans lequel le dispositif de réglage de la tension (TF) est un transformateur (TF).

14. Appareil selon la revendication 12, dans lequel le dispositif de réglage de la tension est un réacteur.

15. Appareil selon la revendication 12, dans lequel le circuit de commande comporte un relais de limitation du temps (TR) pour fixer la durée prédéterminée et un circuit de commande de la limitation du temps connecté au relais de limitation du temps (TR) pour la commande du fonctionnement.

16. Appareil selon la revendication 15, dans lequel le circuit de commande de la limitation du temps comporte un multivibrateur monostable (4) ayant un temps de maintien à l'entrée représentatif de la durée prédéterminée.

17. Appareil selon la revendication 15, dans lequel le circuit de commande comprend en outre un premier relais (R1) connecté au premier ensemble de commutation (MC1'), un second relais (R2) connecté au second ensemble de commutation (MC2'), un troisième relais (R3) connecté au troisième ensemble de commutation (MC3') et des commutateurs de démarrage et d'arrêt pouvant être actionnés manuellement (S1, S2) connectés aux relais.

18. Appareil selon la revendication 12, dans lequel le dispositif de réglage de la tension (TF) est en outre agencé de manière à produire à des secondes bornes de sortie une tension inférieure à la tension de la source d'énergie électrique.

19. Appareil selon la revendication 18, comprenant en outre un quatrième ensemble de commutation (MC4') connecté au circuit de commande, et reliant les secondes bornes de sortie du dispositif de réglage de la tension (TF) aux enroulements primaires (C1, C2, C3) du moteur d'entraînement (M) lorsqu'il est fermé.

# Fig. 1

# Fig. 2

# Fig. 3A

# Fig. 3B

# Fig. 4 A

# Fig. 4 B

## Fig. 5

## Fig. 6

STOPPAGE   PREPA-   RUNNING
            RATION

# Fig. 7

# Fig. 8

## Fig. 9 A

## Fig. 9 B

## Fig. 10 A

## Fig. 10 B

# 0 088 200

## Fig. II A

## Fig. II B